Europäisches Patentamt

European Patent Office

Office européen des brevets

(11) Veröffentlichungsnummer: **0 176 700**
**A1**

# (12) EUROPÄISCHE PATENTANMELDUNG

(21) Anmeldenummer: **85109785.7**

(22) Anmeldetag: **03.08.85**

(51) Int. Cl.⁴: **C 22 C 19/07**
**F 16 C 33/12**

(30) Priorität: **01.09.84 DE 3432209**

(43) Veröffentlichungstag der Anmeldung:
**09.04.86 Patentblatt 86/15**

(84) Benannte Vertragsstaaten:
**AT CH DE FR GB LI SE**

(71) Anmelder: **VACUUMSCHMELZE GMBH**
**Grüner Weg 37 Postfach 2253**
**D-6450 Hanau 1(DE)**

(72) Erfinder: **Dolezal, Norbert, Dipl.-Phys.**
**Saalburgstrasse 8**
**D-6369 Nidderau(DE)**

(54) **Verwendung eines amorphen Streifens zur Abdeckung von Reibflächen.**

(57) Zur Beschichtung von Oberflächen, die einer trockenen Reibung ausgesetzt sind, wie z.B. Führungsschienen in feinmechanischen oder medizinischen Geräten, lassen sich zur Abdeckung eines Reibkörpers mit besonderem Vorteil Streifen aus einer amorphen Legierung mit mindestens 60 Atom.-% Kobalt verwenden, da sich neben einem geringen Verschleißabrieb (hoher Verschleißwiderstand) ein besonders niedriger Reibungskoeffizient ergibt.

EP 0 176 700 A1

./...

Fig 1

Vacuumschmelze GmbH

Hanau

VP 84 P 9559

## Verwendung eines amorphen Streifens zur Abdeckung von Reibflächen

Es gibt eine Reihe von technischen Anwendungen, bei denen metallische Körper aufeinander gleiten müssen, ohne daß zur Verminderung der Reibung Schmiermittel eingesetzt werden können. Dies gilt beispielsweise für die Textil- und Papierverarbeitung, wo die Fäden bzw. Stoff- oder Papierbahnen an Gleitschienen oder Fadenführungen entlanggezogen werden. Auch bei feinmechanischen Geräten müssen oftmals Führungsschienen eingesetzt werden, die nicht gefettet werden sollen oder können. Das gleiche gilt in der medizinischen Technik, wo man zur Reinhaltung der Umgebungsluft Schmierstoffe nur in geschlossenen Gehäusen einsetzt.

Um die Lebensdauer von aneinanderreibenden Flächen zu erhöhen, kann man die aneinanderreibenden Oberflächen beispielsweise beschichten oder härten.

Aufgabe der vorliegenden Erfindung ist es, für derartige Reibflächen eine Abdeckung bzw. ein Beschichtungsmaterial anzugeben, das sich gegenüber anderen Materialien z.B. Stahl-Stahl durch einen besonders niedrigen Reibungskoeffizienten bei Reibung ohne Schmiermittel auszeichnet und trotzdem einen hohen Verschleißwiderstand besitzt.

1.8.1985
G-VP-C/Bz

Es ist beispielsweise aus dem Aufsatz: "IMPROVEMENT IN AMORPHOUS MAGNETIC ALLOYS FOR MAGNETIC HEAD CORE" in Proc. 4th Int. Conf. on Rapidly Quenched Metals (Sendai 1981), Seiten 941 bis 943, bekannt, daß sich kobalthaltige amorphe magnetische Materialien gut für Magnetköpfe eignen, da sie neben einer ausreichend hohen Sättigungsinduktion auch einen im Vergleich zu Nickel-Eisen-Legierungen hohen Verschleißwiderstand gegen Reibung aufweisen.

Es wurde nun zusätzlich gefunden, daß bei Verwendung der Oberfläche eines Streifens aus einer amorphen Legierung mit mindestens 60 Atom.-% Kobalt auf einem der aneinanderreibenden Körper sich neben der hohen Verschleißfestigkeit ein ungewöhnlich niedriger Reibungskoeffizient ergibt. Insbesondere in Verbindung mit einem Reibkörper aus gehärtetem Stahl lassen sich in Gleitrichtung verlaufende Furchen beobachten, deren Oberfläche vermutlich aus einer Co-Oxidschicht mit guten Gleiteigenschaften besteht.

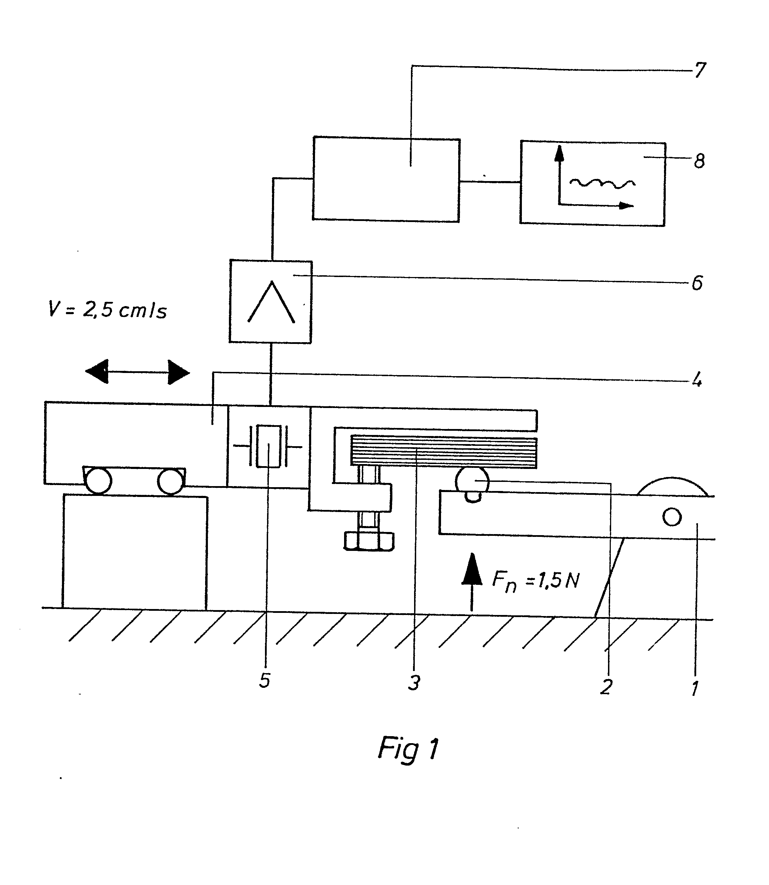

Hierzu wurden verschiedene, in der nachstehenden Tabelle aufgeführte amorphe Bänder in einer in der Zeichnung dargestellten Verschleißapparatur getestet. Bei der Verschleißapparatur ist auf einem Hebelarm 1 eine Kugel 2 aus Stahl bzw. Nickel befestigt worden. Auf der Kugel 2 liegt eine Reibfläche 3 auf, die an der Unterseite mit einem Streifen der jeweiligen Legierung versehen ist. Die Reibfläche 3 wird an einem Wagen 4 gehalten, der mit einer Geschwindigkeit von etwa 2,5 cm/s hin- und herbewegt wird. Auf dem Wagen befindet sich eine Kraft- und Wegmeßeinrichtung 5, die über einen Verstärker 6 und einen Zwischenspeicher 7 einen Koordinatenschreiber 8 steuert.

Die bei Verwendung einer Kugel 2 aus 100 Cr6-Stahl bzw. einer mit Nickel beschichteten Stahlkugel gemessenen Reibungskoeffizienten in der Tabelle sind dabei als Mittelwerte zwischen dem Reibungskoeffizienten am Anfang und am Ende jedes 10.000 Zyklen umfassenden Versuchs ermittelt worden. Der Hebelarm 1 wurde dabei mit einer Kraft von 1,5 N gegen die Reibfläche 3 gedrückt.

Es wurden die nachstehenden Ergebnisse erhalten:

T a b e l l e

| Zusammensetzung | Kugel-material | Volumenverschleiß $(\times 10^{-2} mm^3)$ | | Reibungs-koeffi-zient $\mu$ |
|---|---|---|---|---|
| | | am.Band | Kugel | |
| $Ni_{78}Si_9B_{13}$ | Stahl | 12,24 | <0,01 | 0,75 |
| | Nickel | 10,88 | 2,9 | 0,89 |
| $Co_{67}Mo_{1,5}Fe_4Si_{16,5}B_{11}$ | Stahl | 1,19 | <0,01 | 0,40 |
| | Stahl | 1,11*) | <0,01 | 0,39 |
| | Nickel | 1,33*) | 0,06 | 0,60 |
| $Co_{71}Mn_4Fe_1Mo_1Si_{14}B_9$ | Stahl | 1,70 | <0,01 | 0,35 |
| | Stahl | 1,23*) | <0,01 | 0,35 |
| $Fe_{78}Si_9B_{13}$ | Stahl | 0,63 | 1,32 | 0,85 |
| | Nickel | 0,01 | 2,2 | 0,89 |
| | Stahl | 0,01*) | 1,30 | 0,82 |

*) wärmebehandeltes amorphes Band

Aus der Tabelle ist zu ersehen, daß sich bei kobalthaltigen Legierungen mit Zusätzen von Mangan, Eisen und Molybdän in der Größenordnung von bis zu 10 Atom.-% ein relativ geringes Verschleißvolumen gegenüber einer eisen- oder nickelhaltigen amorph erstarrten Legierung ergibt. Das hier gemessene Verschleißvolumen der amorphen Kobaltlegierung ist zwar etwas höher gegenüber einer amorphen Legierung auf Eisenbasis, allerdings ist dafür der Verschleiß der Kugel wesentlich geringer.

Ein Vergleich der Reibungskoeffizienten ergibt überraschenderweise besonders niedrige Werte für die kobalthaltigen Legierungen, so daß bei Einsatz derartiger Streifen als Abdeckung für Reibflächen neben einem geringen mechanischen Verschleiß relativ niedrige Temperaturerhöhungen durch die Reibung zu erwarten sind. Dies gilt insbesondere, wenn die zweite Reibfläche aus gehärtetem Stahl besteht.

Vacuumschmelze GmbH          VP 84 P 9559

Hanau


Patentansprüche


1. Verwendung eines Streifens aus einer amorphen Legierung, die neben Silizium und Bor mindestens 60 Atom.-% Kobalt enthält, zur Abdeckung einer trockener Reibung ausgesetzten Reibfläche.


2. Verwendung eines Streifens aus einer amorphen Legierung nach Anspruch 1 zur Abdeckung einer trockener Reibung ausgesetzten Reibfläche,
d a d u r c h   g e k e n n z e i c h n e t ,
daß die Legierung zwischen 67 und 71 Atom.-% Kobalt enthält.


3. Verwendung eines Streifens aus einer amorphen Legierung nach Anspruch 2,
d a d u r c h   g e k e n n z e i c h n e t ,
daß bis 10 Atom.-% der Metalle Mangan, Molybdän und/oder Eisen zusätzlich zum Kobalt in der Legierung enthalten sind.


4. Verwendung eines Streifens nach Anspruch 1 für eine Anordnung mit zwei aufeinander gleitenden metallischen Reibflächen,
d a d u r c h   g e k e n n z e i c h n e t ,
daß nur eine dieser Reibflächen mit einem Streifen aus amorphem Material mit mindestens 60 Atom.-% Kobalt bedeckt ist und daß die Oberfläche der zweiten Reibfläche aus kristallinem, metallischem Werkstoff besteht.


1.8.1985
G-VP-C/Bz

5. Verwendung eines Streifens nach Anspruch 4, d a d u r c h   g e k e n n z e i c h n e t , daß der kristalline metallische Werkstoff gehärteter Stahl ist.

Fig 1

Europäisches
Patentamt

**EUROPÄISCHER RECHERCHENBERICHT**

0176700

Nummer der Anmeldung

EP 85 10 9785

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,P | JOURNAL OF MATERIALS SCIENCE LETTERS, Band 4, Nr. 2, 1985, Seiten 133-137, GB; R. MORETON et al.: "The friction and wear behaviour of various metallic glasses" <br> * Seite 135, Tabelle I, Nr.13: MHF 6M: Co50Cr26Fe3Ni2W1B12Si2C4 * | 1,3 | C 22 C 19/07 <br> F 16 C 33/12 |
| | --- | | |
| A | DE-A-2 809 837 (FURUKAWA ELECTRIC CO.) <br> * Anspruch 1; Seite 18, Zeilen 18-20; Seite 22, Zeilen 9-11; Beispiel 1 * | 1,3 | |
| | ----- | | |

RECHERCHIERTE SACHGEBIETE (Int. Cl.4)

C 22 C
F 16 C

Der vorliegende Recherchenbericht wurde für alle Patentansprüche erstellt.

| Recherchenort <br> DEN HAAG | Abschlußdatum der Recherche <br> 04-12-1985 | Prüfer <br> LIPPENS M.H. |
|---|---|---|